# EUROPÄISCHE PATENTSCHRIFT

(11) **EP 2 138 809 B1**
(45) Veröffentlichungstag und Bekanntmachung des Hinweises auf die Patenterteilung: **19.11.2014**
(21) Anmeldenummer: 09008266.0
(22) Anmeldetag: 24.06.2009
(51) Int. Cl.: G01F 1/11

(54) **Horizontaler Woltmanzähler**
Horizontal woltman meter
Compteur woltman horizontal

(30) Priorität: 25.06.2008 CN 200810071284
(43) Veröffentlichungstag der Anmeldung: 30.12.2009
(73) Patentinhaber: Zenner Fuzhou Water Meter Co., Ltd., Jinshan Industrial Area Fuzhou (CN)
(72) Erfinder: Liu, Song, Fuzhou (CN)
(74) Vertreter: Vièl, Christof

(56) Entgegenhaltungen:
- DE-C- 728 132
- FR-A1- 2 359 401
- US-A- 3 304 780

## Beschreibung

Die Erfindung betrifft einen horizontalen Woltmanzähler.

Bei bekannten Woltmanzahlem ist zwischen dem Flüssigkeitseintritt und dem Meßeinsatz einerseits und zwischen dem Meßeinsatz und dem Flüssigkeitsaustritt je ein Hohlraum vorgesehen, der allein der Flüssigkeitszirkulation dient. Nach dem Einbau des Woltmanzählers in eine Flüssigkeitsleitung ist es unvermeidbar, daß das Strömungsprofil verändernde Teile, wie Bögen, Durchmesserveränderungen, Ventile, etc. vorliegen. Dies führt in der Regel zu einer unregelmäßigen Anströmung im Bereich des Meßeinsatzes.

Weiterhin liegt in bekannten Woltmanzählem nur ein Dichtring im Vorderbereich des Meßeinsatzes vor, so daß die Dichtwirkung nicht optimal ist. Dies führt dazu, daß der Meßeinsatz innerhalb der Vorrichtung einseitig eingespannt ist. Bei Großmengenzählern kann dies dazu führen, daß bei einer übergroßen Durchflußrate die Halterung des Einsatzes durch die Wasserbeaufschlagung beschädigt wird, was das Zusammenspiel der inneren Teile der Flüssigkeitsmeßvorrichtung und insbesondere die Meßgenauigkeit reduzieren kann.

Es liegt auch nur ein O-Ring zwischen dem oberen Lager und der Gehäuseabdeckung vor, so daß die Dichtigkeit und die Ausrichtung des Regulierpaddels nicht zufriedenstellend sind.

Schließlich führt die Verbindung zwischen der Trägerplatte und dem hinteren Träger leicht dazu, daß Vorder- und Hinterbereich des Wasserzählers nicht miteinander fluchten, was die Meßgenauigkeit der gesamten Flüssigkeitsmeßvorrichtung beeinflußt.

Aus der FR 2 359 401 A1 ist ein Durchflußzähler bekannt, der ein elektrisches Signal erzeugt. Bei diesem wird ein Flügelrad beidseits in Lagern gehalten, welche über Stützelemente mit der Innnenseite von zylindrischen Rohrelementen verbunden ist.

Die US 3,304,780 A betrifft einen Flüssigkeitszähler, bei dem jeweils ein Kern im Einlaufbereich und im Auslaufbereich von Rippen getragen wird.

Aus der DE 728 132 ist ein Woltmanzähler für Flüssigkeiten bekannt, dessen mit der Zu- und Abflußleitung in der lichten Weite annähernd übereinstimmender, das Flügelrad aufnehmender Meßkanal durch Einsätze dargestellt wird, die mit der Gehäusewandung Räume von ringförmigem Querschnitt bilden und die mit axialen, als Strahlregler dienenden Rippen bis in das Innere des mittleren Einsatzstückes hineinragen und gleichzeitig die Meßflügel tragen.

Aufgabe der Erfindung ist es somit, die oben geschilderten Nachteile zu vermeiden und einen horizontalen Woltmanzähler zu schaffen, der eine große Meßgenauigkeit, einen großen Meßbereich und eine vielseitige Anwendbarkeit aufweist.

Diese Aufgabe wird erfindungsgemäß dadurch gelöst, daß in dem Hohlraum zwischen dem Flüssigkeitseintritt und dem Meßeinsatz und/oder in dem Hohlraum zwischen dem Meßeinsatz und dem Flüssigkeitsaustritt radial angeordnete Längsrippen angeordnet sind die integrale Bestandteile des Gehäuses sind.

Hierdurch wird sichergestellt, daß das Strömungsprofil vereinheitlicht wird und eine gleichgerichtete Strömung erzielt wird. Hierdurch wird der negative Einfluß von vor oder hinter der Flüssigkeitsmeßvorrichtung angeordneten Teilen reduziert und die Meßgenauigkeit der Flüssigkeitsmeßvorrichtung erhöht.

Eine Weiterbildung der Erfindung besteht darin, daß der Meßeinsatz sowohl an seiner der Strömung zugewandten Seite als auch an seiner der Strömung abgewandten Seite einen Dichtring, insbesondere einen O-Ring aufweist.

Dies führt dazu, daß der Meßeinsatz besser gesichert ist und die Gefahr einer Beschädigung der Flüssigkeitsmeßvorrichtung auch bei einer übergroßen Durchflußrate reduziert wird.

Im Rahmen der Erfindung ist weiterhin vorgesehen, daß zwei O-Ringe im Bereich des oberen Lagers des Meßeinsatzes angeordnet sind.

Dies erhöht die Zuverlässigkeit der Dichtung und erhöht die Reibung zwischen dem oberen Lager und der Flanschabdeckung und legt die Dichtplatte zuverlässiger fest, so daß sie sich auch bei hohen Durchflußraten nicht bewegen kann, was die Meßgenauigkeit beeinflussen würde.

Durch diese Maßnahmen wird sichergestellt, daß der Meßeinsatz sicher festgelegt ist und daß dessen Abmessungen reduziert werden können, wodurch die Gehäusemaße reduziert werden können, sowie Material und Gewicht eingespart werden kann.

Nachfolgend wird ein Ausführungsbeispiel der Erfindung anhand von Zeichnungen näher erläutert.

Es zeigen
- Fig. 1: eine Flüssigkeitsmeßvorrichtung gemäß dem Stand der Technik,
- Fig. 2: eine erfindungsgemäße Flüssigkeitsmeßvorrichtung als Explosionszeichnung,
- Fig. 3: eine geschnittene Darstellung einer erfindungsgemäßen Flüssigkeitsmeßvorrichtung,
- Fig. 4: eine Vorderansicht einer erfindungsgemäßen Flüssigkeitsmeßvorrichtung.

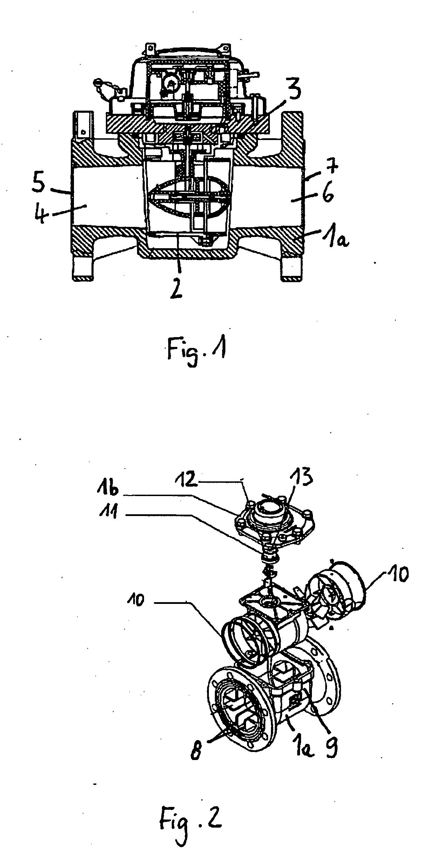

Wie aus Fig. 1 ersichtlich ist, weist die Flüssigkeitsmeßvorrichtung gemäß dem Stand der Technik ein Gehäuse 1a mit einer Gehäuseabdeckung 1b auf, in das ein Meßeinsatz 2 eingeschoben ist, welcher zum Gehäuse 1a hin über einen O-Ring 3 abgedichtet ist. Die Flüssigkeit, deren Durchflußvolumen zu messen ist, tritt in einen ersten Hohlraum 4 zwischen dem Flüssigkeitseintritt 5 und dem Meßeinsatz 2 ein, durchläuft den Meßeinsatz 2 und durchläuft anschließend einen zweiten Hohlraum 6 zwischen dem Meßeinsatz 2 und dem Flüssigkeitsaustritt 7.

Bei der erfindungsgemäßen Flüssigkeitsmeßvorrichtung, wie sie in den Fig. 2, 3 und 4 dargestellt ist, werden in den Hohlräumen 4 und 6 radial angeordnete Längsrippen 8 über den Umfang verteilt. Die Längsrippen 8 sind integrale Bestandteile des Gehäuses la. Die Längsrippen 8 dienen dazu, eine möglichst gleichgerichtete Strömung im Bereich des Meßeinsatzes 2 zu erzielen, womit eine höhere Meßgenauigkeit erreicht wird.

Weiterhin ist zu erkennen, daß der Meßeinsatz 2 in dem Bereich, in dem die Flüssigkeit durch ihn hindurchtritt, im Wesentlichen zylindrisch ausgebildet ist, wobei die Längsachse des Zylinders in Durchflußrichtung angeordnet ist. Das Gehäuse 1a weist eine dieser Form entsprechende Aufnahme 9 für den Meßeinsatz 2 auf. Der Meßeinsatz 2 weist sowohl an seiner der Strömung zugewandten Seite als auch an seiner der Strömung abgewandten Seite einen Dichtring 10 auf, der hier als O-Ring ausgebildet ist. Hierdurch ergibt sich - im Gegensatz zu der einseitigen Lagerung gemäß dem Stand der Technik - eine sichere Lagerung, Abdichtung und Positionierung des Meßeinsatzes 2, so daß die gesamte Flüssigkeit den Meßeinsatz 2 durchströmt.

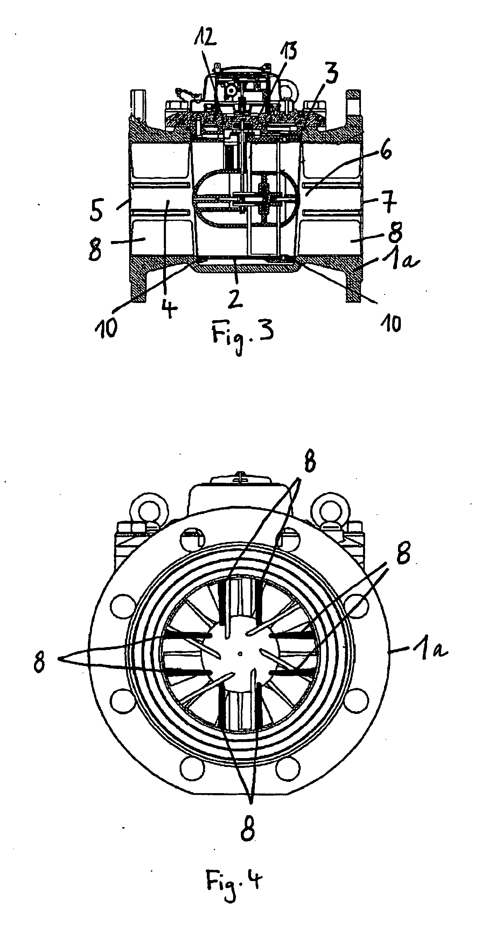

Weiterhin ist aus den Fig. 2 und 3 zu entnehmen, daß im Bereich des oberen Lagers des Meßeinsatzes 2 zwei O-Ringe (ein horizontal angeordneter und ein vertikal angeordneter O-Ring) vorgesehen sind, wodurch eine höhere Dichtigkeit erzielt wird und die Lagerplatte 11 besser gesichert wird. Auf diese Weise wird erreicht, daß diese sich nicht bei hohen Durchflußraten bewegt, was die Meßgenauigkeit negativ beeinflussen würde.

Fig. 4 zeigt die Anordnung der Längsrippen 8, die gleichmäßig über den Umfang verteilt sind, wobei vier Paare von Längsrippen 8 vorgesehen sind, die jeweils um 90° zueinander versetzt angeordnet sind.

## Patentansprüche

1. Horizontaler Woltmanzähler, wobei in dem Hohlraum (4) zwischen dem Flüssigkeitseintritt (5) und dem Meßeinsatz (2) und/oder in dem Hohlraum (6) zwischen dem Meßeinsatz (2) und dem Flüssigkeitsaustritt (7) radial angeordnete Längsrippen (8) angeordnet sind, **dadurch gekennzeichnet, daß** die Längsrippen (8) integrale Bestandteile des Gehäuses (1a) sind.

2. Horizontalter Woltmanzähler gemäß Anspruch 1, **dadurch gekennzeichnet, daß** der Meßeinsatz (2) sowohl an seiner der Strömung zugewandten Seite als auch an seiner der Strömung abgewandten Seite einen Dichtring (10), insbesondere einen O-Ring aufweist.

3. Horizontaler Woltmanzähler gemäß Anspruch 1, **dadurch gekennzeichnet, daß** zwei O-Ringe im Bereich des oberen Lagers des Meßeinsatzes angeordnet sind.

## Claims

1. Horizontal woltman meter wherein radially disposed longitudinal ribs (8) are disposed in the cavity (4) between the fluid inlet (5) and the measuring insert (2) and/or in the cavity (6) between the measuring insert (2) and the fluid exit (7), **characterized in that** the longitudinal ribs (8) are integral part of the housing (1a).

2. Horizontal woltman meter according to claim 1, **characterized in that** the measuring insert (2) is provided with a seal ring (10), in particular an O-ring, as well as on its side turned towards the current as on its side turned away from the current.

3. Horizontal woltman meter according to claim 1, **characterized in that** two O-rings are disposed in the area of the upper bearing of the measuring insert.

## Revendications

1. Compteur woltman horizontal dans lequel des nervures longitudinales (8) sont disposées radialement dans la cavité (4) entre l'entrée de fluide (5) et la garniture de mesure (2) et/ou dans la cavité (6) entre la garniture de mesure (2) et la sortie de fluide (7), **caractérisé en ce que** les nervures longitudinales (8) font partie intégrale du boîtier (1a).

2. Compteur woltman horizontal selon la revendication 1, **caractérisé en ce qu'**une bague d'étanchéité (10), notamment un joint torique, est disposé aussi bien du côté dirigé vers le courant de la garniture de mesure (2) que du côté écarté du courant de la garniture de mesure (2).

3. Compteur woltman selon la revendication 1, **caractérise en ce que** deux joints toriques sont disposés dans la zone du palier supérieur de la garniture de mesure.
